(19) Europäisches Patentamt
European Patent Office
Office européen des brevets

(11) **EP 3 505 575 B1**

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(51) Int Cl.:
**C09D 5/02** (2006.01)   **C09D 7/40** (2018.01)
**C09D 7/61** (2018.01)

(21) Anmeldenummer: **17211218.7**

(22) Anmeldetag: **29.12.2017**

(54) **BESCHICHTUNGSSTOFFE, BESCHICHTUNGEN AUS DIESEN BESCHICHTUNGSSTOFFEN SOWIE DEREN VERWENDUNG**

COATING MATERIALS, COATINGS MADE FROM THESE COATING MATERIALS AND THEIR USE

MATÉRIAUX DE REVÊTEMENT, REVÊTEMENTS À BASE DES DITS MATÉRIAUX DE REVÊTEMENT AINSI QUE LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.07.2019 Patentblatt 2019/27**

(73) Patentinhaber: **DAW SE**
**64372 Ober-Ramstadt (DE)**

(72) Erfinder:
• **BRENNER, Thomas**
**64367 Mühltal (DE)**
• **WESTMEIER, Johannes**
**64572 Büttelborn (DE)**
• **BÜCHNER, Doris**
**64372 Ober-Ramstadt (DE)**
• **GROSSKOPF, Jan**
**64367 Mühltal (DE)**

(74) Vertreter: **Metten, Karl-Heinz**
**Boehmert & Boehmert**
**Anwaltspartnerschaft mbB**
**Pettenkoferstrasse 22**
**80336 München (DE)**

(56) Entgegenhaltungen:
EP-A1- 2 626 205     EP-A1- 2 942 376
EP-A1- 3 156 382     EP-A1- 3 252 109
EP-A2- 1 908 803     WO-A1-98/51860

**Beschreibung**

Die vorliegende Erfindung betrifft wässrige Beschichtungsstoffe, insbesondere in Form von Dispersionsfarben, Grundierungen und Putzmassen, sowie Farb- und Grundierungsanstriche auf einer Substratoberfläche, erhältlich durch Auftragen der erfindungsgemäßen Beschichtungsstoffe. Außerdem betrifft die Erfindung die Verwendung der erfindungsgemäßen Beschichtungsstoffe für die Herstellung von oder als Dispersionsfarben Grundierungen und Putzmassen.

Wässrige Beschichtungsstoffe als Dispersionsfarbe, Grundierung oder Putzmasse zu verwenden, ist dem Fachmann bekannt. Die mit diesen Beschichtungsstoffen erhältlichen Beschichtungen haben regelmäßig mehrere Funktionen zu erfüllen. Neben einer dekorativen Oberflächengestaltung soll häufig auch Schutz gegen Feuchteeintritt und/oder Befall mit Pilzen, Algen oder Bakterien gewährleistet werden. Optisch einwandfreie Oberflächen mit hohem Deckvermögen werden dabei im Allgemeinen durch Verwendung von Titandioxid als Weißpigment erhalten. Dies hat seine Ursache unter anderem darin, dass Titandioxid über eine hohe Brechzahl sowie über eine sehr geringe Lichtabsorption verfügt. Bei Farben, die ein hohes Deckvermögen aufweisen sollen, wird daher regelmäßig auf Titandioxidgehalte zurückgegriffen, die signifikant oberhalb der Menge von 1,0 Gewichtsprozent liegen. Des Weiteren sind die Titandioxidspezies Rutil sowie insbesondere Anatas fotokatalytisch aktiv und tragen zu einer fotokatalytischen Selbstreinigung von Oberflächen bei. Allerdings ist die Gewinnung von Titandioxid energie- und damit kostenintensiv. Auch müssen regelmäßig Vorkehrungen getroffen werden, um die Gefahr von Staubexplosionen zu minimieren. Schließlich hat das Komitee zur Risikobewertung (RAC) der Europäischen Chemikalienagentur (ECHA) empfohlen, Zubereitungen enthaltend signifikante Mengen an Titandioxid als Kanzerogen der Kategorie 2 einzustufen. Eine derartige Beeinflussung der Gesundheit durch Titandioxid tritt dabei allerdings nur dann auf, wenn der Mensch Titandioxid in kleinteiliger, staubförmiger Form aufnimmt, d.h. in einer Form, die mitunter bei der Pigmentherstellung selber und dem Abschleifen von Beschichtungsoberflächen enthaltend Titandioxid anzutreffen ist, nicht jedoch bei Kontakt mit wässrigen Beschichtungsstoffen enthaltend das Weißpigment Titandioxid.

Bislang fehlt es noch an einem Weißpigment, das einerseits sämtliche vorangehend geschilderten Vorteile von Titandioxid in sich vereint, gleichzeitig unter Gesundheitsaspekten völlig unbedenklich zu handhaben ist, jedoch nicht mit den genannten intrinsischen Nachteilen von Titandioxid behaftet ist.

In der DE 20 2017 104 644 U1 wird eine Dispersionsfarbe beschrieben, die ohne den Einsatz des Weißpigments Titandioxid auskommen soll. Als Alternative wird hierbei zurückgegriffen auf einen Calciumcarbonat-haltigen Komposit aus 30 bis 50 Gewichtsprozent eines präzipitierten Calciumcarbonats, 30 bis 50 Gewichtsprozent an Calcium-Hydroxid-Pigmentpartikeln und 10 bis 40 Gewichtsprozent an Wasserglas. Bei dieser Vorgehensweise ist jedoch von Nachteil, dass der Herstellung der Dispersionsfarbe stets der separate Schritte der Herstellung des Calciumcarbonat-haltigen Komposits vorgeschaltet werden muss.

Der vorliegenden Erfindung lag daher die Aufgabe zugrunde, Beschichtungsstoffe zur Verfügung zu stellen, die nicht mit den geschilderten Nachteilen der Beschichtungsstoffe des Stands der Technik behaftet sind. Ferner lag der Erfindung insbesondere die Aufgabe zugrunde, Beschichtungsstoffe zur Verfügung zu stellen, die völlig ohne Titandioxid auskommen oder in denen Titandioxid nur noch in sehr geringen Mengen zugegen ist, die gleichwohl über ein hohes Deckvermögen verfügen.

Demgemäß wurde ein wässriger Beschichtungsstoff, insbesondere für Innenraumbeschichtungen, gefunden, bestehend aus oder enthaltend

ac) Füllstoffe, bestehend aus oder umfassend

ac1) einen ersten Füllstoff ac1-1) mit einer mindestens bimodalen, insbesondere bimodalen, Korngrößenverteilung mit einem ersten lokalen Maximum im Bereich von 0,15 bis 0,50 $\mu$m, bevorzugt im Bereich von im 0,20 bis 0,40 $\mu$m, und einem zweiten lokalen Maximum im Bereich von 0,90 bis 3,0 $\mu$m, bevorzugt im Bereich von 1,0 bis 2,5 $\mu$m und/oder einen zweiten Füllstoff ac1-2) mit einem mittleren Partikeldurchmesser D50 im Bereich von 0,15 bis 0,50 $\mu$m, bevorzugt im Bereich von im 0,20 bis 0,40 $\mu$m, und einen dritten Füllstoff ac1-3) mit einem mittleren Partikeldurchmesser D50 im Bereich von 0,90 bis 3,0 $\mu$m, bevorzugt im Bereich von 1,0 bis 2,5 $\mu$m,

ac2) einen vierten Füllstoff mit einem mittleren Partikeldurchmesser D50 im Bereich von 6,0 bis 22 $\mu$m, bevorzugt im Bereich von 7,0 bis 19 $\mu$m, und

ac3) gegebenenfalls mindestens einen weiteren Füllstoff, der nicht ein Füllstoff gemäß ac1) und ac2) ist,

b) mindestens ein organisches Bindemittel, das eine wässrige Polymerdispersion darstellt,

c) kein Titandioxid oder Titandioxid in einer Menge, gerechnet als Feststoffanteil, kleiner 1,0 Gewichtsprozent, bezogen auf das Gesamtgewicht des Beschichtungsstoffs,

d) mindestens ein Additiv,

e) gegebenenfalls mindestens ein Wasserglas und/oder Kieselsol, insbesondere Wasserglas, sowie

f) gegebenenfalls mindestens ein Alkylalkoxysilan, Alkylalkoxysiloxan, wasserlösliches Alkalialkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon, und, und

g) gegebenenfalls mindestens ein Pigment, das nicht Titandioxid ist.

Besonders geeignete erfindungsgemäße Beschichtungsstoffe umfassen dabei 5 bis 65 Gewichtsprozent, bevorzugt 10 bis 65 Gewichtsprozent, Füllstoffe ac), und/oder 0,50 bis 20 Gewichtsprozent, vorzugsweise 1 bis 20 Gewichtsprozent und besonders bevorzugt 1,5 bis 15 Gewichtsprozent Polymerdispersion b), jeweils bezogen auf den Festgehalt, und/oder
0 bis 0,99 Gewichtsprozent, bevorzugt 0,20 bis 0,98 Gewichtsprozent und besonders bevorzugt 0,30 bis 0,95 Gewichtsprozent, Titandioxid c), und/oder
0,05 bis 3,0 Gewichtsprozent, vorzugsweise 0,10 bis 2,0 Gewichtsprozent, besonders bevorzugt 0,15 bis 1,0 Gewichtsprozent, an Komponente f), bevorzugt Alkalialkylsilikonat, besonders bevorzugt Kaliummethylsilikonat, und/oder
0,10 bis 5,0 Gewichtsprozent, bevorzugt 0,20 bis 4,5 Gewichtsprozent und besonders bevorzugt 0,30 bis 3,0 Gewichtsprozent, an Additiven d), jeweils bezogen auf den Fest- bzw. Reinstoffanteil, und/oder
größer 0 bis 1,0 Gewichtsprozent, bevorzugt 0,05 bis 0,50 Gewichtsprozent und besonders bevorzugt 0,10 bis 0,30 Gewichtsprozent, jeweils bezogen auf den Feststoffanteil, an Wasserglas e) und vorzugsweise kein Kieselsol, und/oder
0 bis 20 Gewichtsprozent, vorzugsweise 4 bis 16 Gewichtsprozent, besonders bevorzugt 8 bis 15 Gewichtsprozent, an Komponente g), und/oder
0 bis 3,0 Gewichtsprozent, vorzugsweise 0,10 bis 2,0 Gewichtsprozent, besonders bevorzugt 0,15 bis 1,0 Gewichtsprozent, an Komponente h),
wobei die den Beschichtungsstoff bildenden Komponenten in der Summe sich stets zu 100,0 Gewichtsprozent addieren.
Ferner sind auch solche erfindungsgemäßen Beschichtungsstoffe aufgrund ihrer vorteilhaften Eigenschaften in Bezug auf die zu lösende Aufgabe hervorzuheben, bei denen der erste Füllstoff ac1-1) oder der zweite Füllstoff ac1-2) und der dritte Füllstoff ac1-3) ein synthetisches Calciumcarbonat umfasst oder darstellt und die ferner die Komponente f), bevorzugt das wasserlösliche Alkalialkylsilikonat, besonders bevorzugt Kaliummethylsilikonat, und o bis 0,3 Gewichtsprozent an Komponente e) (Feststoffanteil), bevorzugt Wasserglas, enthalten sowie ebenfalls kein Titandioxid oder Titandioxid (Komponente c)) in einer Menge, gerechnet als Feststoffanteil, kleiner 1,0 Gewichtsprozent, bezogen auf das Gesamtgewicht des Beschichtungsstoffs, und das organische Bindemittel b) in Form einer wässrigen Dispersion auf Basis von Vinylaromat-Copolymeren, insbesondere aus oder umfassend Styrol und Acrylate, und/oder Reinacrylat-Copolymeren.
Hierbei sind solche erfindungsgemäße Beschichtungsstoffe besonders bevorzugt, die
5 bis 65 Gewichtsprozent, bevorzugt 10 bis 65 Gewichtsprozent, Füllstoffe ac), und
0,50 bis 20 Gewichtsprozent, vorzugsweise 1 bis 20 Gewichtsprozent und besonders bevorzugt 1,5 bis 15 Gewichtsprozent Polymerdispersion b), jeweils bezogen auf den Festgehalt, und
0 bis 0,99 Gewichtsprozent, bevorzugt 0,20 bis 0,98 Gewichtsprozent und besonders bevorzugt 0,30 bis 0,95 Gewichtsprozent, Titandioxid c), und
0,05 bis 3,0 Gewichtsprozent, vorzugsweise 0,10 bis 2,0 Gewichtsprozent, besonders bevorzugt 0,15 bis 1,0 Gewichtsprozent, an Komponente f), bevorzugt Alkalialkylsilikonat, besonders bevorzugt Kaliummethylsilikonat, und
0,10 bis 5,0 Gewichtsprozent, bevorzugt 0,20 bis 4,5 Gewichtsprozent und besonders bevorzugt 0,30 bis 3,0 Gewichtsprozent, an Additiven d), jeweils bezogen auf den Fest- bzw. Reinstoffanteil, und/oder
größer 0 bis 1,0 Gewichtsprozent, bevorzugt 0,05 bis 0,50 Gewichtsprozent und besonders bevorzugt 0,10 bis 0,30 Gewichtsprozent, jeweils bezogen auf den Feststoffanteil, an Wasserglas e) und vorzugsweise kein Kieselsol, und
0 bis 20 Gewichtsprozent, vorzugsweise 4 bis 16 Gewichtsprozent, besonders bevorzugt 8 bis 15 Gewichtsprozent, an Komponente g), und
0 bis 3,0 Gewichtsprozent, vorzugsweise 0,10 bis 2,0 Gewichtsprozent, besonders bevorzugt 0,15 bis 1,0 Gewichtsprozent, an Komponente h), umfassen,
wobei die den Beschichtungsstoff bildenden Komponenten in der Summe sich stets zu 100,0 Gewichtsprozent addieren.
Besonders zufriedenstellende Beschichtungen hinsichtlich des Nass- und Trockendeckvermögens stellen sich auch mit solchen erfindungsgemäßen Beschichtungsstoffen ein, bei denen die Füllstoffe ac) 2 bis 30 Gewichtsprozent, bevorzugt 4 bis 25 Gewichtsprozent und besonders bevorzugt 8 bis 20 Gewichtsprozent, an dem ersten Füllstoff gemäß ac1), insbesondere synthetischem Calciumcarbonat, oder an dem zweiten und dritten Füllstoff gemäß ac1), 2 bis 30 Gewichtsprozent, bevorzugt 4 bis 25 Gewichtsprozent und besonders bevorzugt 6 bis 20 Gewichtsprozent, an dem vierten Füllstoff gemäß ac2) und o bis 61 Gewichtsprozent, bevorzugt 2 bis 45 Gewichtsprozent und besonders bevorzugt 5 bis 40 Gewichtsprozent, an dem weiteren Füllstoff gemäß ac3) umfassen oder hieraus bestehen, wobei die Füllstoffe ac1) und ac2) sowie gegebenenfalls ac3) stets einen Füllstoffgehalt im Bereich von 3 bis 65 Gewichtsprozent, bevorzugt im Bereich von 10 bis 60 Gewichtsprozent, ergeben.

Bevorzugt sind dabei auch solche erfindungsgemäßen Beschichtungsstoffe, bei denen die Füllstoffe ac)

4 bis 25 Gewichtsprozent und bevorzugt 8 bis 20 Gewichtsprozent an dem ersten Füllstoff gemäß ac1), insbesondere synthetischem Calciumcarbonat, oder an dem zweiten und dritten Füllstoff gemäß ac1),
4 bis 25 Gewichtsprozent und bevorzugt 6 bis 20 Gewichtsprozent an dem vierten Füllstoff gemäß ac2) und
2 bis 45 Gewichtsprozent und bevorzugt 5 bis 40 Gewichtsprozent an dem weiteren Füllstoff gemäß ac3) umfassen oder hieraus bestehen, wobei die Füllstoffe ac1), ac2) und ac3) stets einen Füllstoffgehalt im Bereich von 3 bis 65 Gewichtsprozent, bevorzugt im Bereich von 10 bis 60 Gewichtsprozent, ergeben.

Die Partikelgröße D50 der vorangehend genannten Füllstoffe wird gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) ermittelt. Für die Bestimmung der D50-Werte kann dabei z.B. auf den sogenannten Laser Scattering Particle Size Distribution Analyser, wie von der Firma Horiba unter der Gerätebezeichnung "LA 950 V2" erhältlich, zurückgegriffen werden.

Gemäß einer weiteren Ausgestaltung sind solche erfindungsgemäßen Beschichtungsstoffe besonders geeignet, deren berechnete Pigment-Volumen-Konzentration (PVK) die der kritischen Pigment-Volumen-Konzentration der aus dem Beschichtungsstoff erhältlichen Beschichtung entspricht oder die, vorzugsweise, oberhalb dieser kritischen Pigment-Volumen-Konzentration, insbesondere bis etwa 10 % oder bis etwa 5 % oberhalb der kritischen Pigment-Volumen-Konzentration, liegt. Die kritische Pigment-Volumen-Konzentration liegt hierbei regelmäßig im Bereich von 55 bis 85, bevorzugt im Bereich von 60 bis 80 und besonders bevorzugt im Bereich von 65 bis 75.

Die Pigment-Volumen-Konzentration PVK der Beschichtungsstoffe kann gemäß der folgenden Formel berechnet werden:

$$PVK\ [\%] = \left( \sum V_{Pigmente} + \sum V_{Füllstoffe}\ /\ \sum V_{Pigmente} + \sum V_{Füllstoffe} + \sum V_{Bindemittel} \right) \times 100.$$

Die kritische Pigment-Volumen-Konzentration (KPVK) ist im Sinne von ISO 4618:2014(de) als ein bestimmter Wert der PVK definiert, bei welchem die Hohlräume zwischen sich berührenden Feststoffteilchen (hier: Pigmente und Füllstoffe) im Anstrichfilm gerade noch mit Bindemittel gefüllt sind. Die Lage der KPVK kann z.B. durch den Verlauf von Filmeigenschaften wie der Film Spannung bestimmt werden. Dazu legt man regelmäßig eine PVK-Reihe an, indem man ein bestimmtes Dispersionsfarben-Mahlgut mit der der jeweiligen PVK entsprechenden Menge an Kunststoffdispersion vermischt. Hierbei hat es sich als zweckmäßig erwiesen, zunächst größere PVK-Abstände zu wählen, um eine erste Übersicht zu erhalten. Danach kann man zur Ermittlung der genauen Lage der KPVK im vermuteten Bereich der KPVK kleinere PVK-Intervalle gewählt werden. Die Filmspannung hat bekanntlich bei der KPVK ein Maximum. Dies wird durch ein Maximum an Krümmung der Filme angezeigt. Aus dem Grad der Krümmung lässt sich sodann die Stärke der Filmspannung ermitteln. Die Reproduzierbarkeit dieser Methode liegt im Allgemeinen bei ± 1 PVK-Einheit (s.a. Dellef Gysau, "Füllstoffe - Grundlagen und Anwendungen", Vincentz Network GmbH & Co. KG, Hannover, 2005).

Die der Erfindung zugrunde liegende Aufgabe wird insbesondere auch dadurch in besonders zuverlässiger Weise gelöst, dass in den Beschichtungsstoffen der mindestens eine erste Füllstoff ac1-1) ein synthetisches Mineral, bevorzugt synthetisches Calciumcarbonat, umfasst oder darstellt und/oder dass der zweite Füllstoff ac1-2) ein synthetisches Mineral, bevorzugt synthetisches Calciumcarbonat, und/oder einen silikatischen Füllstoff, bevorzugt ein synthetisches Mineral, besonders bevorzugt synthetisches Calciumcarbonat, umfasst oder darstellt und/oder dass der dritte Füllstoff ac1-3) ) ein synthetisches Mineral, bevorzugt synthetisches Calciumcarbonat, und/oder einen silikatischen Füllstoff, bevorzugt ein synthetisches Mineral, besonders bevorzugt synthetisches Calciumcarbonat, umfasst oder darstellt und/oder dass der vierte Füllstoff ac2) einen silikatischen Füllstoff umfasst oder darstellt und/oder dass der weitere Füllstoff ac3) mindestens einen silikatischen Füllstoff und/oder mindestens einen Calciumcarbonat-basierten Füllstoff, insbesondere Calciumcarbonat, umfasst oder darstellt. Synthetisches Calciumcarbonat ist dem Fachmann auch unter "precipitated calcium carbonate" bzw. unter dem Akronym PCC bekannt.

In der vorangehend geschilderten Ausführungsvariante kann die Komponente ac1) mit einem ersten Füllstoff ac1-1) mit mindestens bimodaler, insbesondere bimodaler, Korngrößenverteilung, wie vorangehend spezifiziert, insbesondere synthetisches Calciumcarbonat, vorliegen. Alternativ können darin zusätzlich auch der zweite Füllstoff ac1-2) oder der dritte Füllstoff ac1-3) mit den genannten mittleren Teilchengrößen oder der zweite Füllstoff ac1-2) und der dritte Füllstoff ac1-3) vorliegen. Der zweite Füllstoff ac1-2) und der dritte Füllstoff ac1-3) liegen in einer besonders bevorzugten Ausgestaltung mit einer jeweils monomodalen Korngrößenverteilung vor, insbesondere auch dann, wenn der Füllstoff ac1) ausschließlich aus den Komponenten ac1-2) und ac1-3) gebildet wird.

Hierbei sind auch solche erfindungsgemäßen Beschichtungsstoffe besonders geeignet, bei denen der erste Füllstoff ac1-1) synthetisches Calciumcarbonat umfasst oder darstellt oder bei denen der zweite Füllstoff ac1-2) synthetisches Calciumcarbonat umfasst oder darstellt und der dritte Füllstoff ac1-3) synthetisches Calciumcarbonat umfasst oder darstellt und bei denen der vierte Füllstoff ac2) einen silikatischen Füllstoff umfasst oder darstellt und bei denen der weitere Füllstoff ac3) Calciumcarbonat umfasst oder darstellt. Besonders bevorzugt wird demgemäß auf synthetisches Calciumcarbonat mit der vorangehend beschriebenen bimodalen Korngrößenverteilung zurückgegriffen.

Geeignete silikatische Füllstoffe umfassen zum Beispiel Kaolinite, Feldspate, Muskovite und deren Mischungen. Bevorzugt wird unter den silikatischen Füllstoffen auf Kaolin, Natriumfeldspat und/oder Glimmer zurückgegriffen. Unter den Feldspaten sind Alkalifeldspate bevorzugt. Unter letzteren wird bevorzugt auf Natriumfeldspat zurückgegriffen.

Auch sind unter den erfindungsgemäßen Beschichtungsstoffen solche besonders geeignet, um die der Erfindung zugrunde liegende Aufgabe zu lösen, in denen mindestens eine Verbindung der Komponente f) zwingend enthalten ist, bevorzugt wasserlösliches Alkalialkylsilikonat und besonders bevorzugt Kaliummethylsilikonat. Erfindungsgemäße Beschichtungsstoffe, insbesondere erfindungsgemäßen Dispersionsfarben, umfassen demgemäß in einer besonders bevorzugten Ausgestaltung demgemäß ferner mindestens ein Alkylalkoxysilan, Alkylalkoxysiloxan, wasserlösliches Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon. Hierbei umfassen geeignete Alkylsilikonate insbesondere Verbindungen der Formel (II) HO-[Si(R$^3$)(OX)-O-]$_n$H, worin der Rest R$^3$ eine Alkylgruppe mit 1 bis 8 C-Atomen, X ein Kation und n eine Zahl im Bereich von 1 bis 6 bedeutet. Vorzugsweise liegt das Molgewicht dieser Alkylsilikonate im Bereich von 100 bis 500. In einer besonders geeigneten Ausgestaltung ist R3 eine Methyl-, Ethyl-, i-Propyl- oder n-Propylgruppe, vorzugsweise eine Methylgruppe. Als Kationen sind insbesondere die Alkalimetalle, insbesondere Kalium, geeignet. Beispielhaft seien als solche bevorzugte Alkylsilikonate Kaliummethylsilikonat und Natriumpropylsilikonat genannt. Als besonders vorteilhaft hat sich Kaliummethylsilikonat erwiesen.

In einer weiteren Ausführungsvariante können die erfindungsgemäßen Beschichtungsstoffe, ferner Kieselsol und/oder Wasserglas enthalten. Wasserglas kann dabei ausgewählt sein aus der Gruppe bestehend aus Natrium-, Kalium-, Lithiumwasserglas und beliebigen Mischungen hiervon. Bevorzugt wird hierbei auf Kalium- und/oder Lithiumwasserglas zurückgegriffen. Der Gewichtsanteil von Wasserglas liegt dabei geeigneter Weise im Bereich von größer o bis 1,0 Gewichtsprozent, bevorzugt 0,05 bis 0,50 Gewichtsprozent und besonders bevorzugt 0,10 bis 0,30 Gewichtsprozent, jeweils bezogen auf den Feststoffanteil. Bei dem erfindungsgemäß eingesetzten Wasserglas handelt es sich regelmäßig um in Wasser lösliches bzw. gelöstes Wasserglas. Die wässrige Lösung wird auch als flüssiges Wasserglas bezeichnet. Für die erfindungsgemäßen Beschichtungsstoffe wird häufig auf eine 15 bis 40 gew.-%ige, insbesondere 20 bis 35 gew.-%ige wässrige Wasserglaslösung zurückgegriffen. In einer zweckmäßigen Ausgestaltung kann auf eine 22 Gew.-%ige oder eine 28 Gew.-%ige wässrige Wasserglaslösung zurückgegriffen werden. Geeignete Wassergläser lassen sich auch über ihre Molverhältniszahl SiO2 : M2O (MVZ) charakterisieren. Diese liegt bevorzugt im Bereich von etwa 0,5 bis 4,0 und besonders bevorzugt im Bereich von 0,5 bis kleiner 2,5.

Geeignete Kieselsole sind dem Fachmann bekannt. Kieselsole sind im Handel in Form wässriger kolloidaler Suspensionen von Polykieselsäuremolekülen erhältlich. Das in wässrigen Systemen vorliegende Kieselsol ist vorzugsweise alkalisch und hat besonders bevorzugt einen pH-Wert größer 9. Die mittlere Partikelgröße des besonders geeigneten Kieselsols liegt üblicherweise bei 80 nm oder darunter und ist bevorzugt kleiner oder gleich 40 nm und insbesondere bevorzugt kleiner oder gleich 20 nm. Ganz besonders bevorzugt ist die mittlere Partikelgröße des Kieselsols kleiner oder gleich 10 nm.

Erfindungsgemäße Beschichtungsstoffe, die in Bezug auf die zu lösende Aufgabe besonders zufriedenstellende Ergebnisse liefern, zeichnen sich auch dadurch aus, dass sie neben mindestens einer Verbindung der Komponente f), bevorzugt wasserlösliches Alkalialkylsilikonat und besonders bevorzugt Kaliummethylsilikonat, auch mindestens ein Wasserglas und/oder Kieselsol gemäß Komponente e), insbesondere Wasserglas, und besonders bevorzugt kein Kieselsol, geeigneter Weise in den vorangehend spezifizierten allgemeinen und bevorzugten Mengenbereichen, enthalten.

Die erfindungsgemäßen Beschichtungsstoffe enthalten bevorzugt ferner mindestens ein Dispergiermittel und/oder mindestens ein Netzmittel (Komponente h)). Auf den Einsatz von Dispergiermitteln wird insbesondere bei Anwesenheit von Titandioxid und/oder von dem mindestens einen Pigment g), das nicht Titandioxid ist, in den erfindungsgemäßen Beschichtungsstoffen, insbesondere in den erfindungsgemäßen Dispersionsfarben, zurückgegriffen. Netzmittel kommen hingegen bevorzugt bei erfindungsgemäßen Beschichtungsstoffen in Form von Grundierungen zum Einsatz. Unter den Netz- bzw. Dispergiermitteln sind im Allgemeinen die nichtionischen oberflächenaktiven Netz- und/oder Dispergiermittel bevorzugt. Besonders geeignete Netz- und/oder Dispergiermittel können dabei ausgewählt werden aus der Gruppe bestehend aus Natrium- oder Ammoniumpolyacrylaten, Kaliumpolyacrylaten, Polyphosphaten, EO/PO-Blockco-polymeren und deren beliebigen Mischungen. Bevorzugt wird unter den geeigneten Netz- und/oder Dispergiermitteln auf Ethylendiamin-EO/PO-Blockcopolymere zurückgegriffen.

Geeignete Dispergiermittel umfassen zum Beispiel polyanionische Dispergiermittel. Diese können zweckmäßigerweise ausgewählt sein aus der Gruppe bestehend aus Polycarboxylaten, insbesondere Salze von Polyacrylsäuren, Polyphosphaten, insbesondere lineare Polyphosphate und/oder zyklische Metaphosphate, und beliebigen Mischungen hiervon. Bevorzugt wird auf die Salze von Polyacrylsäuren zurückgegriffen. Als Dispergiermittel werden regelmäßig solche Substanzen bezeichnet, die die festen partikulären Bestandteile, insbesondere Pigmente, in einer noch nicht ausgehärteten Beschichtungszusammensetzung in der Schwebe halten und eine Agglomeration dieser Teilchen, auch als Flokkulation bekannt, verhindern bzw. zurückdrängen. In Abgrenzung von Netzmitteln, bei denen es sich regelmäßig um niedrigmolekulare, amphiphile Substanzen handelt, umfassen Dispergiermittel im Allgemeinen gegen Flokkulation stabilisierende oligomere und polymere Verbindungen. Geeignete Netzmittel können demgemäß niedrigmolekulare, d.h. nicht-oligomere und nicht polymere Tenside umfassen, beispielsweise Fettalkoholsulfate oder Alkylphosphonate. Bevorzugt enthalten die erfindungsgemäßen Beschichtungsmassen das mindestens eine Dispergiermittel. Besonders geeignet sind diese erfindungsgemäßen Beschichtungsmassen im Wesentlichen frei von Netzmitteln.

Es hat sich überraschend gezeigt, dass die erfindungsgemäßen Beschichtungsstoffe, und hier insbesondere diejenigen, die mindestens eine Verbindung der Komponente f) enthalten, konservierungsmittelfrei ausgestaltet werden können. Demgemäß stellt die vorliegende Erfindung ebenfalls ab auf solche Beschichtungsstoffe, die im Wesentlichen frei von Topf- und/oder Filmkonservierungsmitteln sind, bevorzugt frei von Topfkonservierungsmitteln, z.B. frei von Isothiazolinonen, und besonders bevorzugt frei von Topf- und Filmkonservierungsmitteln. Demgemäß sind mit der vorliegenden Erfindung Beschichtungsstoffe zugänglich, die frei von organischen bioziden Konservierungsmitteln und besonders bevorzugt frei von jeglichen Konservierungsmitteln sind.

Die erfindungsgemäßen Beschichtungsstoffe werden im Sinne der vorliegenden Erfindung im Einklang mit der "Vergabegrundlage für Umweltzeichen" der RAL gGmbH betreffend "Emissionsarme Innenwandfarben RAL-UZ 102" (Ausgabe Januar 2015) regelmäßig als konservierungsmittelfrei angesehen, wenn darin keine Konservierungsmittel oder Konservierungsmittel, auf die Einzelsubstanz bezogen (einschließlich Formaldehyd), in einer Menge kleiner 2 ppm, sowie in Bezug auf CIT (5-Chlor-2-methyl-4-isothiazolin ) in einer Menge kleiner 0,5 ppm enthalten sind. Die erfindungsgemäßen wässrigen Beschichtungsstoffe können demgemäß auch für die biozidfreie Behandlung von Gebäudeflächen, z.B. Außenfassaden von Gebäuden, eingesetzt werden.

In denjenigen Ausführungsformen der erfindungsgemäßen Beschichtungsstoffe, die mindestens ein Pigment, das nicht Titandioxid ist, enthalten, wird hierfür bevorzugt zurückgegriffen auf synthetische Hohlpigmente, insbesondere solche mit einem D 50-Wert kleiner oder gleich 10 $\mu$m, bevorzugt mit einem D50-Wert kleiner oder gleich 5,0 $\mu$m und besonders bevorzugt mit einem D-50-Wert kleiner oder gleich 2,0 $\mu$m. Diese Hohlpigmente liegen in den erfindungsgemäßen Beschichtungsstoffen in einer Menge im Bereich von o bis 20, bevorzugt 0,5 bis 10 und besonders bevorzugt 1 bis 8 Gew.-%, jeweils bezogen auf das Gesamtgewicht des Beschichtungsstoffes, vor. Alternativ oder zusätzlich kann auch auf Pigmente zurückgegriffen werden, ausgewählt aus der Gruppe bestehend aus Zinksulfid, Zinkoxid, Baryt, Ruß, Eisenoxid, Chromoxid, Kobaltblau, Phtalocyaninpigmenten, Spinellpigmenten und Nickel- und Chromtitanat und deren Mischungen. Bevorzugt wird hierbei auf Zinksulfid und/oder Zinkoxid zurückgegriffen. Diese liegen in den erfindungsgemäßen Beschichtungsstoffen bevorzugt in einer Menge im Bereich von 1 bis 25, bevorzugt 5 bis 20, besonders bevorzugt 3 bis 15 Gew.-%, jeweils bezogen auf das Gesamtgewicht des Beschichtungsstoffes, vor. Insbesondere durch Mitverwendung von Zinksulfid, vorzugsweise in den genannten Mengenbereichen, lassen sich mit den erfindungsgemäßen Beschichtungsstoffen sehr gute Resultate im Hinblick auf das Nass- und Trockendeckvermögen auch ohne Anwesenheit von Titandioxid erzielen.

Grundsätzlich können in den erfindungsgemäßen Beschichtungsstoffen auch die folgenden Pigmente einzeln oder in beliebiger Kombination zum Einsatz kommen. Mit diesen Pigmenten lassen sich zum Beispiel Pastellfarbtöne einstellen. Als solche geeigneten Pigmente seien exemplarisch anorganische Pigmente wie Bunt-, Schwarz- und Weißpigmente (Farbpigmente) sowie Glanzpigmente und organische Pigmente wie Bunt- und Schwarzpigmente genannt. Als geeignete anorganische Weißpigmente kommen zum Beispiel Zinkweiß, Farbenzinkoxid; Zinksulfid und/oder Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat. Unter den genannten Pigmenten umfassen besonders geeignete Pigmente zum Beispiel Zinksulfid, Zinkoxid, Baryt, Ruß, Eisenoxid, Chromoxid, Kobaltblau, Spinellpigment, Nickeltitanat, Chromtitanat und deren beliebige Mischungen.

Als solche geeignete organischen Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente. Geeignete organische Pigmente können hierbei z.B. ausgewählt werden aus der Gruppe bestehend aus Monoazopigmenten, insbesondere C.I. Pigment Braun 25, C.I. Pigment Orange 5, 13, 38, oder 64, C.I. Pigment Rot 1, 2, 3, 4, 5, 8, 9, 12, 17, 22, 23, 31, 48: 1, 48: 2, 48: 3, 49, 51: 1, 52: 1, 52: 2, 53, 53: 1, 53: 3, 57: 1, 58: 2, 58: 4, 112, 146, 148, 170, 175, 184, 185, 187, 191: 1, 208, 210, 245, 247 und/oder 251, C.I. Pigment Gelb 1, 3, 62, 73, 120, 151, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16,17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109, 139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange 43, und/oder C.I. Pigment Rot 194, Perylenpigmenten, insbesondere C.I. Pigment Schwarz 31 und/oder C.I. Pigment Schwarz 32, C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

In einer zweckmäßigen Ausgestaltung wird für die organischen Bindemittel b) der erfindungsgemäßen Beschichtungsstoffe zurückgegriffen auf wässrige Dispersionen auf Basis von Vinylacetat/Ethylen-Copolymeren, Copolymeren auf Basis von Vinylaromaten, insbesondere Styrol, und Acrylaten und/oder Copolymeren auf Basis von Reinacrylaten. Besonders bevorzugt kommen bei den erfindungsgemäßen Beschichtungsstoffen wässrige Dispersionen auf Basis von Styrolacrylatcopolymeren zum Einsatz.

Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das in Wasser dispergierte oder dispergierbare Polymer dabei auf i) (Meth)acrylsäureestern, insbesondere Acrylsäureestern, und Vinylaromaten, insbesondere Styrol, oder auf ii) Meth)acrylsäureestern, insbesondere Acrylsäureestern, und Vinylestern mindestens einer Koch-Säure, insbesondere der Versatinsäure, und gegebenenfalls Vinylaromaten, insbesondere Styrol.

Das organische Bindemittel umfasst in einer bevorzugten Ausführungsform in wässriger Dispersion vorliegende sphärische bzw. kugelförmige Kunststoffpartikel mit einem durchschnittlichen Durchmesser kleiner 3 μm, vorzugsweise kleiner 2 μm, besonders bevorzugt kleiner 1 μm, insbesondere enthaltend oder gebildet aus mindestens einem Acrylat-, Styrol-, insbesondere Styrolacrylat-, Vinylacetat-, Vinylpropionat- und/oder Urethanhomo- und/oder -copolymeren oder einer beliebigen Mischung hiervon. Die genannten Kunststoffpartikel bzw. -kugeln weisen in einer besonders zweckmäßigen Ausgestaltung einen durchschnittlichen Durchmesser kleiner 500 nm, insbesondere kleiner 250 nm oder 200 nm, beispielsweise im Bereich von 150 nm, auf. Das organische Bindemittel liegt in einer bevorzugten Ausgestaltung in Form einer Styrolacrylatcopolymerdispersion vor.

Der pH-Wert der erfindungsgemäßen Beschichtungsstoffe liegt bevorzugt im Bereich von 8,5 bis 12 und besonders bevorzugt im Bereich von 9 bis 11,5 bzw. wird bevorzugt auf einen pH-Wert im Bereich von 8,5 bis 12 und besonders bevorzugt im Bereich von 9 bis 11,5 eingestellt.

Für die erfindungsgemäßen Beschichtungsstoffe wird zweckmäßiger Weise auf Additive d) zurückgegriffen, vorzugsweise ausgewählt aus der Gruppe bestehend aus Verdickern, Entschäumern, Konservierungsmitteln, Stabilisatoren, insbesondere pH-Stabilisatoren, Flammschutzmitteln, Hydrophobierungsmitteln, Mattierungsmitteln, insbesondere Fällungskieselsäure, Oberflächenadditiven, insbesondere Silikonoberflächenadditiven, beispielsweise polyethermodifiziertes Polymethylalkylsiloxan und/oder Silikonpolyether-Copolymere, pH-Einstellmitteln und Mischungen hiervon.

Geeignete pH-Stabilisatoren umfassen zum Beispiel Komplexierungsmittel, insbesondere mehrzähnige Komplexierungsmittel wie EDTA. Ferner sollen im Sinne der Erfindung unter geeignete pH-Einstellmittel zum Beispiel Natriumhydroxid, z.B. in Form von Natronlauge, Kaliumhydroxid wie auch flüchtige Neutralisationsmittel wie Ammoniaklösung und/oder Amine wie 2-Amino-2-methyl-1-propanol und/oder 2-Amino-2-ethyl-1,3-propandiol verstanden werden.

Unter den für die erfindungsgemäßen Beschichtungsstoffen zum Einsatz kommenden Verdickern sind solche bevorzugt, die ausgewählt sind aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, Polyvinylalkohol-Verdickern, Polyetherpolyol-Verdickern, Schichtsilikat-Verdicker, Polysaccharid-Verdickern, insbesondere Xanthan, und beliebigen Mischungen hiervon.

Geeignete Verdicker auf Cellulose-Basis umfassen z.B. Cellulose, mikrokristalline Cellulose, Celluloseether und modifizierte Celluloseether, insbesondere hydrophob modifizierte Celluloseether, und auch Polysaccharide, die sich von den Galactomannosen ableiten, z.B. Polygalactomannosen, des Weiteren Polysaccharide auf Basis von Carrageen, Guarkernmehl, Xanthan und Johannisbrotkernmehl. Beispielhaft seien als modifizierte Cellulose-ether Methylcellulose, Hydroxypropylmethylcellulose, Hydroxyethylcellulose, Hydroxypropylcellulose, Ethylhydroxyethylcellulose und Natriumcarboxymethylcellulose, genannt. Als hydrophob modifizierte Celluloseether kommen z.B. die Reaktionsprodukte von Hydroxyethylcellulose oder Hydroxypropylcellulose mit dem Glycidylether von N-Ethyl-N-2-hydroxyethylperfluoroctansulfonamid (FC10-HEC) sowie nichtionische Celluloseether mit Methyl-, Hydroxyethyl- und Hydroxypropyl-Resten sowie mit einem langkettigen, über eine Etherbindung gebundenen Alkylrest mit 10 bis 24 Kohlenstoffatomen in Betracht.

Unter den Acrylatverdickern sind sogenannte HASE-Verdicker (hydrophobically modified alkali soluble emulsion) bevorzugt, und zwar insbesondere auf Basis von Copolymeren enthaltend oder bestehend aus Methylmethacrylat und/oder Methacrylsäure und Ethylacrylat. HASE-Verdicker können z.B. gewonnen werden aus Methacrylsäure als hydrophilem Monomer, einem Alkylvinylether als hydrophobem Monomer sowie Ethylacrylat, Butylacrylat und/oder Methylmethacrylat als weiterem Monomer zur Einstellung eines optimalen Gleichgewichts zwischen Wasserempfindlichkeit und Wasserverträglichkeit. Auch können vernetzte HASE-Verdicker eingesetzt werden. Diese verfügen regelmäßig über eine eingeschränkte Wasserlöslichkeit. Besonders geeignete Acrylatverdicker, insbesondere der HA-SE-Acrylatverdicker, weisen ein zahlenmittleres Molekulargewicht $M_n$ im Bereich von 100 bis 300 kDa, bevorzugt im Bereich von 150 bis 250 kDa, z.B. im Bereich von 170 bis 200 kDa, und/oder ein gewichtsmittleres Molekulargewicht $M_n$ im Bereich von 400 bis 800 kDa, bevorzugt im Bereich von 500 bis 700 kDa, z.B. im Bereich von 550 bis 650 kDa, auf.

Geeignete Polyurethan-Verdicker basieren im einfachsten Fall auf einem hydrophilen Mittelblock aus Poly(ethylenoxid) (PEO)-Einheiten, an den durch Umsetzung mit einem Diisocyanat und einem Fettalkohol über Urethanbindungen zwei hydrophobe Endsegmente angeknüpft wurden. Bei Polyurethan-Verdickern handelt es sich somit im Allgemeinen um nichtionische verzweigte oder unverzweigte Blockcopolymere aus Polyethylenoxid-Ketten, Polypropylenoxid-Ketten oder Poly(ethylenoxid-propylenoxid)-Ketten, die über Urethanbindungen miteinander verknüpft sind und die endständige langkettige Alkyl- oder Alkylengruppen mit 8 bis 30, vorzugsweise 10 bis 24 und besonders bevorzugt 12 bis 20 Kohlenstoffatomen oder Aryl- oder alkylierte Arylgruppen mit 6 bis 30, vorzugsweise 6 bis 20 Kohlenstoffatomen tragen. Typische Alkylgruppen sind beispielsweise Dodecyl- oder Stearyl-Gruppen, eine typische Alkylengruppe ist beispielsweise eine Oleylgruppe, eine typische Arylgruppe ist die Phenylgruppe und eine typische alkylierte Arylgruppe ist beispielsweise eine Nonylphenylgruppe. Geeignete Polyurethan-Verdicker sind dem Fachmann bekannt. Das Molekulargewicht solcher Polyurethanverdicker liegt üblicherweise im Bereich von $10^4$ bis $10^5$ g/mol.

Geeignete Verdicker auf Basis von Schichtsilikaten können ausgewählt sein aus der Gruppe bestehend aus Smectit, Montmorillonit, Hectorit und Bentonit oder deren Mischungen. Neben den herkömmlichen, d.h. den nicht organisch modifizierten bzw. nicht in delamierter Form vorliegenden Schichtsilikaten, kann man zusätzlich oder alternativ des Weiteren auch auf organisch modifizierte Schichtsilikate als Verdicker zurückgreifen. Organisch modifizierte Schichtsilikate sind dem Fachmann bekannt und sind auch im Handel erhältlich. Hierbei handelt es sich um sogenannte delaminierte Schichtsilikate, bei denen in der Schichtenstruktur, d.h. zwischen den Schichten kationische organische Verbindungen vorliegen. Man spricht hier auch von Interkalationsverbindungen. Besonders bevorzugt erhält man solche delaminierten Schichtsilikate mittels Modifizierung mit Alkylammonium- oder Ammoniumalkoxylat-Verbindungen.

Geeignete Polyether-Polyol-Verdicker sind dem Fachmann bekannt. Exemplarisch sei auf "Wässrige Siliconharz-Beschichtungssysteme für Fassaden", Wolfgang Schultze, 2. Aufl., Seiten 345 bis 347, verwiesen (ISBN 3-8169-1966-9).

Überraschend hat sich gezeigt, dass mit den erfindungsgemäßen Beschichtungsstoffen auch solche zugänglich sind, die im Wesentlichen frei von Konservierungsmitteln, bevorzugt frei von organischen bioziden Konservierungsmitteln, besonders bevorzugt frei von Topf- und/oder Filmkonservierungsmitteln sein können.

Die erfindungsgemäßen Beschichtungsstoffe eignen sich grundsätzlich für den Einsatz als Dispersionsfarbe, Grundierung oder Putzmasse. Die Beschichtungsstoffe sind besonders bevorzugt für den Einsatz als Dispersionsfarbe im Innenbereich geeignet.

Der Wassergehalt der erfindungsgemäßen Beschichtungsstoffe liegt dabei üblicherweise im Bereich von 20 bis 60 Gewichtsprozent, bevorzugt im Bereich von 25 bis 55 Gewachtsprozent und besonders bevorzugt im Bereich von 30 bis 50 Gewichtsprozent, wobei der Wassergehalt in den erfindungsgemäßen Dispersionsfarben regelmäßig größer ist als der Wassergehalt in den erfindungsgemäßen Grundierungen und Putzmassen.

Die der Erfindung zu Grunde liegende Aufgabe wird des Weiteren gelöst durch Farb- oder Grundierungsanstriche auf Substratoberflächen, erhalten oder erhältlich durch ein- oder mehrmaliges Auftragen der erfindungsgemäßen Beschichtungsstoffe auf einer Substratoberfläche.

Mit der vorliegenden Erfindung geht die überraschende Erkenntnis einher, dass sich durch den kombinierten Einsatz von speziell ausgewählten Füllstoffen in vorgegebenen Mengenbereichen und in vorgegebenen Partikelgrößenbereichen wässrige Beschichtungsstoffe, insbesondere Dispersionsfarben, erhalten lassen, die ohne bzw. nahezu ohne Titandioxid auskommen, gleichwohl ein zufriedenstellendes Nass- und Trockendeckvermögen zeigen. Demgemäß gelingt mit den erfindungsgemäßen wässrigen Beschichtungsstoffen aufgrund des Verzichts bzw. nahezu vollständigen Verzichts auf Titandioxid ein relativ kostengünstiger Zugang zu Grundierungs- bzw. Farbanstrichen, die sich durch ein hohes Deckvermögen und eine gute Nassabriebbeständigkeit auszeichnen. Die mit den erfindungsgemäßen Beschichtungsstoffen erhaltenen Beschichtungen liefern ein Trockendeckvermögen, das dem Trockendeckvermögen solcher Beschichtungsstoffe des Stands der Technik im Wesentlichen oder nahezu entspricht, die mit den üblichen, hohen Mengen mit Titandioxid ausgestattet sind. Als weiterer Vorteil hat sich bei den erfindungsgemäßen Beschichtungsstoffen herausgestellt, dass auch Beschichtungen mit matten oder stumpfmatten Glanzgraden bei gleichzeitig gutem Deckvermögen zugänglich sind.

Ein weiterer Vorteil der erfindungsgemäßen Beschichtungsstoffe, insbesondere solchen enthaltend synthetisches Calciumcarbonat in bimodaler Korngrößenverteilung, geht damit einher, dass auf Wasserglas vollständig bzw. nahezu vollständig verzichtet werden kann, und zwar ohne dass ein negativer Einfluss auf die Stabilität der erfindungsgemäßen Beschichtungen zu befürchten ist. Ohne an eine Theorie gebunden zu sein, wird hiermit gemutmaßt, dass dies mit der Verwendung nur geringe Mengen an Titandioxid bzw. dem vollständigen Verzicht auf Titandioxid zusammenhängt. Schließlich können mit den erfindungsgemäßen Beschichtungsstoffen aufgrund des Verzichts auf Wasserglas bzw. auf eine wesentliche Menge an Wasserglas auch alkali-, aber nicht wasserglasstabile organische Bindemittel bzw. diese enthaltende Dispersionsfarben eingesetzt werden, beispielsweise wässrige Dispersion auf Basis von Vinylaromat-Copolymeren wie Vinylacetat/EthylenCopolymeren. Auch ist überraschend, dass selbst bei Anwesenheit von synthetischen Mineralien, insbesondere von synthetischem Calciumcarbonat, lange Lagerzeit möglich sind, ohne dass ein Viskositätsanstieg beobachtet wird.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässriger Beschichtungsstoff, insbesondere für Innenraumbeschichtungen, bestehend aus oder enthaltend

   ac) Füllstoffe, bestehend aus oder umfassend
   ac1) einen ersten Füllstoff ac1-1) mit einer mindestens bimodalen, insbesondere bimodalen, Korngrößenverteilung mit einem ersten lokalen Maximum im Bereich von 0,15 bis 0,50 $\mu$m, bevorzugt im Bereich von im 0,20 bis 0,40 $\mu$m, und einem zweiten lokalen Maximum im Bereich von 0,90 bis 3,0 $\mu$m, bevorzugt im Bereich von 1,0 bis 2,5 $\mu$m und/oder
   einen zweiten Füllstoff ac1-2) mit einem mittleren Partikeldurchmesser D50 im Bereich von 0,15 bis 0,50 $\mu$m, bevorzugt im Bereich von im 0,20 bis 0,40 $\mu$m, und einen dritten Füllstoff ac1-3) mit einem mittleren Partikeldurchmesser D50 im Bereich von 0,90 bis 3,0 $\mu$m, bevorzugt im Bereich von 1,0 bis 2,5 $\mu$m,
   ac2) einen vierten Füllstoff mit einem mittleren Partikeldurchmesser D50 im Bereich von 6,0 bis 22 $\mu$m, bevorzugt im Bereich von 7,0 bis 19 $\mu$m, und
   ac3) gegebenenfalls mindestens einen weiteren Füllstoff, der nicht ein Füllstoff gemäß ac1) und ac2) ist,
   b) mindestens ein organisches Bindemittel, das eine wässrige Polymerdispersion darstellt,
   c) kein Titandioxid oder Titandioxid in einer Menge, gerechnet als Feststoffanteil, kleiner 1,0 Gewichtsprozent, bezogen auf das Gesamtgewicht des Beschichtungsstoffs,
   d) mindestens ein Additiv,
   e) gegebenenfalls mindestens ein Wasserglas und/oder Kieselsol, insbesondere Wasserglas, sowie
   f) gegebenenfalls mindestens ein Alkylalkoxysilan, Alkylalkoxysiloxan, wasserlösliches Alkalialkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon, und/oder
g) gegebenenfalls mindestens ein Pigment, das nicht Titandioxid ist,

wobei die Bestimmung der mittleren Partikeldurchmesser D50 gemäß DIN ISO 9276-1:2004-09 und ISO 9276-2:2014-05 erfolgt.

2. Beschichtungsstoff nach Anspruch 1, ferner umfassend h) mindestens ein Dispergiermittel und/oder mindestens ein Netzmittel.

3. Beschichtungsstoff nach Anspruch 1 oder 2, umfassend
5 bis 65 Gewichtsprozent, bevorzugt 10 bis 65 Gewichtsprozent, Füllstoffe ac), und/oder
0,50 bis 20 Gewichtsprozent, vorzugsweise 1 bis 20 Gewichtsprozent und besonders bevorzugt 1,5 bis 15 Gewichtsprozent Polymerdispersion b), jeweils bezogen auf den Festgehalt, und/oder
0 bis 0,99 Gewichtsprozent, bevorzugt 0,20 bis 0,98 Gewichtsprozent und besonders bevorzugt 0,30 bis 0,95 Gewichtsprozent, Titandioxid c), und/oder 0,05 bis 3,0 Gewichtsprozent, vorzugsweise 0,10 bis 2,0 Gewichtsprozent, besonders bevorzugt 0,15 bis 1,0 Gewichtsprozent, an Komponente f), bevorzugt Alkalialkylsilikonat, besonders bevorzugt Kaliummethylsilikonat, und/oder 0,10 bis 5,0 Gewichtsprozent, bevorzugt 0,20 bis 4,5 Gewichtsprozent und besonders bevorzugt 0,30 bis 3,0 Gewichtsprozent, an Additiven d), jeweils bezogen auf den Fest- bzw. Reinstoffanteil, und/oder
größer 0 bis 1,0 Gewichtsprozent, bevorzugt 0,05 bis 0,50 Gewichtsprozent und besonders bevorzugt 0,10 bis 0,30 Gewichtsprozent, jeweils bezogen auf den Feststoffanteil, an Wasserglas e) und vorzugsweise kein Kieselsol, und/oder 0 bis 20 Gewichtsprozent, vorzugsweise 4 bis 16 Gewichtsprozent, besonders bevorzugt 8 bis 15 Gewichtsprozent, an Komponente g), und/oder 0 bis 3,0 Gewichtsprozent, vorzugsweise 0,10 bis 2,0 Gewichtsprozent, besonders bevorzugt 0,15 bis 1,0 Gewichtsprozent, an Komponente h),
wobei die den Beschichtungsstoff bildenden Komponenten in der Summe sich stets zu 100,0 Gewichtsprozent addieren.

4. Beschichtungsstoff nach Anspruch 1, 2 oder 3, insbesondere nach Anspruch 3, **dadurch gekennzeichnet, dass** die Füllstoffe ac)
2 bis 30 Gewichtsprozent, bevorzugt 4 bis 25 Gewichtsprozent und besonders bevorzugt 8 bis 20 Gewichtsprozent, an dem ersten Füllstoff gemäß ac1), insbesondere synthetischem Calciumcarbonat, oder an dem zweiten und dritten Füllstoff gemäß ac1),
2 bis 30 Gewichtsprozent, bevorzugt 4 bis 25 Gewichtsprozent und besonders bevorzugt 6 bis 20 Gewichtsprozent, an dem vierten Füllstoff gemäß ac2) und 0 bis 61 Gewichtsprozent, bevorzugt 2 bis 45 Gewichtsprozent und besonders bevorzugt 5 bis 40 Gewichtsprozent, an dem weiteren Füllstoff gemäß ac3) umfassen oder hieraus bestehen, wobei die Füllstoffe ac1) und ac2) sowie gegebenenfalls ac3) und der zweite Füllstoff sowie gegebenenfalls der weitere Füllstoff stets einen Füllstoffgehalt im Bereich von 3 bis 65 Gewichtsprozent, bevorzugt im Bereich von 10 bis 60 Gewichtsprozent, ergeben.

5. Beschichtungsstoff nach einem der vorangehenden Ansprüche, **gekennzeichnet durch**
eine berechnete Pigment-Volumen-Konzentration (PVK) die der kritischen Pigment-Volumen-Konzentration der aus dem Beschichtungsstoff erhältlichen Beschichtung entspricht oder die vorzugsweise oberhalb dieser kritischen Pigment-Volumen-Konzentration liegt.

6. Beschichtungsstoff nach einem der vorangehenden Ansprüche, **dadurch gekennzeichnet, dass**
der erste Füllstoff ac1-1) ein synthetisches Mineral, bevorzugt synthetisches Calciumcarbonat, umfasst oder darstellt und/oder dass
der zweite Füllstoff ac1-2) ein synthetisches Mineral, bevorzugt synthetisches Calciumcarbonat, und/oder einen silikatischen Füllstoff, bevorzugt ein synthetisches Mineral, besonders bevorzugt synthetisches Calciumcarbonat, umfasst oder darstellt und/oder dass der dritte Füllstoff ac1-3) ein synthetisches Mineral, bevorzugt synthetisches Calciumcarbonat, und/oder einen silikatischen Füllstoff, bevorzugt ein synthetisches Mineral, besonders bevorzugt synthetisches Calciumcarbonat, umfasst oder darstellt und/oder dass
der vierte Füllstoff ac2) einen silikatischen Füllstoff umfasst oder darstellt und/oder dass
der weitere Füllstoff ac3) mindestens einen silikatischen Füllstoff und/oder mindestens einen Calciumcarbonatbasierten Füllstoff, insbesondere Calciumcarbonat, umfasst oder darstellt.

7. Beschichtungsstoff nach einem der vorangehenden Ansprüche, **dadurch gekennzeichnet, dass**

dieser die mindestens eine Verbindung der Komponente f) enthält, bevorzugt wasserlösliches Alkalialkylsilikonat und besonders bevorzugt Kaliummethylsilikonat, oder dass

dieser die mindestens eine Verbindung der Komponente f), bevorzugt wasserlösliches Alkalialkylsilikonat und besonders bevorzugt Kaliummethylsilikonat, und das mindestens eine Wasserglas und/oder Kieselsol gemäß Komponente e), insbesondere Wasserglas, enthält.

8. Beschichtungsstoff nach einem der vorangehenden Ansprüche, **dadurch gekennzeichnet, dass**
der erste Füllstoff ac1-1) oder der zweite Füllstoff ac1-2) und der dritte Füllstoff ac1-3) ein synthetisches Calciumcarbonat umfasst oder darstellt und ferner umfassend die Komponente f), bevorzugt das wasserlösliche Alkalialkylsilikonat, besonders bevorzugt Kaliummethylsilikonat, und
0 bis 0,3 Gewichtsprozent, bevorzugt 0,01 bis 0,3 Gewichtsprozent, an Komponente e) (Feststoffanteil), bevorzugt Wasserglas, und
kein Titandioxid oder Titandioxid (Komponente c)) in einer Menge, gerechnet als Feststoffanteil, kleiner 1,0 Gewichtsprozent, bezogen auf das Gesamtgewicht des Beschichtungsstoffs, und dass
das organische Bindemittel b) in Form einer wässrigen Dispersion auf Basis von Vinylaromat-Copolymeren, insbesondere aus oder umfassend Styrol und Acrylate, und/oder Reinacrylat-Copolymeren vorliegt.

9. Beschichtungsstoff nach einem der vorangehenden Ansprüche, **dadurch gekennzeichnet, dass**
dieser im Wesentlichen frei von Topf- und/oder Filmkonservierungsmitteln ist, bevorzugt frei von organischen bioziden Konservierungsmitteln und besonders bevorzugt frei von jeglichen Konservierungsmitteln.

10. Beschichtungsstoff nach einem der vorangehenden Ansprüche, **dadurch gekennzeichnet, dass**
diese einen pH-Wert im Bereich von 8,5 bis 12, vorzugsweise im Bereich von 9 bis 11,5, aufweist oder auf einen pH-Wert im Bereich von 8,5 bis 12, vorzugsweise im Bereich von 9 bis 11,5, eingestellt ist.

11. Beschichtungsstoff nach einem der vorangehenden Ansprüche, **dadurch gekennzeichnet, dass**
das mindestens eine Additiv d) ausgewählt ist aus der Gruppe bestehend aus Verdickern, Entschäumern, Konservierungsmitteln, Stabilisatoren, insbesondere pH-Stabilisatoren, Flammschutzmitteln, Hydrophobierungsmitteln, Mattierungsmitteln, insbesondere Fällungskieselsäure, Oberflächenadditiven, insbesondere Silikonoberflächenadditiven, beispielsweise polyethermodifiziertes Polymethylalkylsiloxan und/oder Silikonpolyether-Copolymere, und Mischungen dieser Verbindungen.

12. Beschichtungsstoff nach einem der vorangehenden Ansprüche, **dadurch gekennzeichnet, dass**
dieser eine Dispersionsfarbe, eine Grundierung oder eine Putzmasse, insbesondere eine Dispersionsfarbe, darstellt.

13. Farb- oder Grundierungsanstrich auf einer Substratoberfläche, erhalten oder erhältlich durch ein- oder mehrmaliges Auftragen des Beschichtungsstoffes nach einem der vorangehenden Ansprüche auf der Substratoberfläche.

14. Verwendung des Beschichtungsstoffes nach einem der Ansprüche 1 bis 12 für die Herstellung von oder als Dispersionsfarbe, insbesondere Dispersionsfarbe für den Innenbereich, Grundierung oder Putzmasse.

**Claims**

1. An aqueous coating material, in particular for interior coatings, consisting of or containing

ac) fillers consisting of or comprising
ac1) a first filler ac1-1) with an at least bimodal, in particular bimodal, grain size distribution with a first local maximum in the range from 0.15 to 0.50 $\mu$m, preferably in the range from 0.20 to 0.40 $\mu$m, and a second local maximum in the range from 0.90 to 3.0 $\mu$m, preferably in the range from 1.0 to 2.5 $\mu$m and/or
a second filler ac1-2) with an average particle diameter D50 in the range from 0.15 to 0.50 $\mu$m, preferably in the range from 0.20 to 0.40 $\mu$m, and a third filler ac1-3) with an average particle diameter D50 in the range from 0.90 to 3.0 $\mu$m, preferably in the range from 1.0 to 2.5 $\mu$m,
ac2) a fourth filler with an average particle diameter D50 in the range from 6.0 to 22 $\mu$m, preferably in the range from 7.0 to 19 $\mu$m, and
ac3) optionally at least one further filler which is not a filler according to ac1) and ac2),
b) at least one organic binder which constitutes an aqueous polymer dispersion,
c) no titanium dioxide or titanium dioxide in a quantity, calculated as solids content, of less than 1.0 weight per cent, based on the total weight of the coating material,

d) at least one additive,

e) optionally at least one water glass and/or silica sol, in particular water glass, and

f) optionally at least one alkylalkoxysilane, alkylalkoxysiloxane, water-soluble alkali metal alkyl siliconate, in particular potassium methyl siliconate, monoalkylsilanetriol, dialkylsilanediol, trialkylsilanol, alkali metal salt of monoalkylsilanetriol, in particular potassium methylsilanetriolate and/or potassium ethylsilanetriolate, dialkylsilanediol or trialkylsilanol or any mixtures thereof, and/or

g) optionally at least one pigment which is not titanium dioxide,

wherein the average particle diameter D50 is determined to DIN ISO 9276-1:2004-09 and ISO 9276-2:2014-05.

2. The coating material according to Claim 1, further comprising h) at least one dispersant and/or at least one wetting agent.

3. The coating material according to Claim 1 or 2, comprising

5 to 65 weight per cent, preferably 10 to 65 weight per cent, fillers ac), and/or

0.50 to 20 weight per cent, preferably 1 to 20 weight per cent and particularly preferably 1.5 to 15 weight per cent polymer dispersion b), in each case based on the solids content, and/or

0 to 0.99 weight per cent, preferably 0.20 to 0.98 weight per cent and particularly preferably 0.30 to 0.95 weight per cent, titanium dioxide c), and/or

0.05 to 3.0 weight per cent, preferably 0.10 to 2.0 weight per cent, particularly preferably 0.15 to 1.0 weight per cent, of component f), preferably alkali metal alkyl siliconate, particularly preferably potassium methyl siliconate, and/or

0.10 to 5.0 weight per cent, preferably 0.20 to 4.5 weight per cent and particularly preferably 0.30 to 3.0 weight per cent, of additives d), in each case based on the solids or pure substance content, and/or

greater than 0 to 1.0 weight per cent, preferably 0.05 to 0.50 weight per cent and particularly preferably 0.10 to 0.30 weight per cent, in each case based on the solids content, of water glass e) and preferably no silica sol, and/or

0 to 20 weight per cent, preferably 4 to 16 weight per cent, particularly preferably 8 to 15 weight per cent, component g), and/or

0 to 3.0 weight per cent, preferably 0.10 to 2.0 weight per cent, particularly preferably 0.15 to 1.0 weight per cent, of component h),

wherein the sum of components forming the coating material always adds up to 100.0 weight per cent.

4. The coating material according to Claim 1, 2 or 3, in particular according to Claim 3, **characterized in that**

the fillers ac) comprise or consist of

2 to 30 weight per cent, preferably 4 to 25 weight per cent and particularly preferably

8 to 20 weight per cent, of the first filler according to ac1), in particular synthetic calcium carbonate, or of the second and third fillers according to ac1),

2 to 30 weight per cent, preferably 4 to 25 weight per cent and particularly preferably 6 to 20 weight per cent, of the fourth filler according to ac2) and

0 to 61 weight per cent, preferably 2 to 45 weight per cent and particularly preferably 5 to 40 weight per cent, of the further filler according to ac3), wherein fillers ac1) and ac2) and optionally ac3) and the second filler and optionally further filler always amount to a filler content in the range from 3 to 65 weight per cent, preferably in the range from 10 to 60 weight per cent.

5. The coating material according to any one of the preceding claims, **characterized by** a calculated pigment volume concentration (PVC) which corresponds to the critical pigment volume concentration of the coating obtained from the coating material or is preferably higher than this critical pigment volume concentration.

6. The coating material according to any one of the preceding claims, **characterized in that**

the first filler ac1-1) comprises or constitutes a synthetic mineral, preferably synthetic calcium carbonate, and/or **in that**

the second filler ac1-2) comprises or constitutes a synthetic mineral, preferably synthetic calcium carbonate, and/or a silicate filler, preferably a synthetic mineral, particularly preferably synthetic calcium carbonate, and/or **in that** the third filler ac1-3) comprises or constitutes a synthetic mineral, preferably synthetic calcium carbonate, and/or a silicate filler, preferably a synthetic mineral, particularly preferably synthetic calcium carbonate, and/or **in that**

the fourth filler ac2) comprises or constitutes a silicate filler and/or **in that** the further filler ac3) comprises or constitutes at least one silicate filler and/or at least one calcium carbonate-based filler, in particular calcium carbonate.

7. The coating material according to any one of the preceding claims, **characterized in that**
it contains the at least one component f) compound, preferably water-soluble alkali metal alkyl siliconate and particularly preferably potassium methyl siliconate, or **in that**
it contains the at least one component f) compound, preferably water-soluble alkali metal alkyl siliconate and particularly preferably potassium methyl siliconate, and the at least one water glass and/or silica sol according to component e), in particular water glass.

8. The coating material according to any one of the preceding claims, **characterized in that**
the first filler ac1-1) or the second filler ac1-2) and the third filler ac1-3) comprises or constitutes a synthetic calcium carbonate and furthercomprising component f), preferably the water-soluble alkali metal alkyl siliconate, particularly preferably potassium methyl siliconate, and
0 to 0.3 weight per cent, preferably 0.01 to 0.3 weight per cent, of component e) (solids content), preferably water glass, and
no titanium dioxide or titanium dioxide (component c)) in a quantity, calculated as solids content, of less than 1.0 weight per cent, based on the total weight of the coating material, and **in that**
the organic binder b) assumes the form of an aqueous dispersion based on vinylaromatic copolymers, in particular prepared from or comprising styrene and acrylates, and/or pure acrylate copolymers.

9. The coating material according to any one of the preceding claims, **characterized in that**
it is substantially free of in-can and/or film preservatives, is preferably free of organic biocidal preservatives and particularly preferably free of any preservatives.

10. The coating material according to any one of the preceding claims, **characterized in that**
it has a pH value in the range from 8.5 to 12, preferably in the range from 9 to 11.5, or is adjusted to a pH value in the range from 8.5 to 12, preferably in the range from 9 to 11.5.

11. The coating material according to any one of the preceding claims, **characterized in that**
the at least one additive d) is selected from the group consisting of thickeners, defoamers, preservatives, stabilizers, in particular pH stabilizers, flame retardants, water repellents, matting agents, in particular precipitated silica, surface additives, in particular silicone surface additives, for example polyether-modified polymethylalkylsiloxane and/or silicone-polyether copolymers, and mixtures of these compounds.

12. The coating material according to any one of the preceding claims, **characterized in that**
it constitutes an dispersion paint, a primer or a render composition, in particular an dispersion paint,

13. A paint or primer coat on a substrate surface obtained or obtainable by single or multiple application of the coating material according to any one of the preceding claims onto the substrate surface.

14. Use of the coating material according to any one of Claims 1 to 12 for the production of or as an dispersion paint, in particular an dispersion paint for interior use, a primer or a render composition.

**Revendications**

1. Matériau de revêtement aqueux, en particulier pour des revêtements intérieurs, se composant, ou contenant

ac) des charges se composant de, ou comprenant
ac1) une première charge ac1-1) avec une distribution granulométrique au moins bimodale, en particulier bimodale, avec un premier maximum local dans la plage de 0,15 à 0,50 $\mu$m, préférablement dans la plage de 0,20 à 0,40 $\mu$m, et un second maximum local dans la plage de 0,90 à 3,0 $\mu$m. préférablement dans la plage de 1,0 à 2,5 $\mu$m et/ou
une deuxième charge ac 1-2) avec un diamètre moyen de particule D50 dans la plage de 0,15 à 0,50 $\mu$m, préférablement dans la plage de 0,20 à 0,40 $\mu$m, et une troisième charge ac1-3) avec un diamètre moyen de particule D50 dans la plage de 0,90 à 3,0 $\mu$m, préférablement dans la plage de 1,0 à 2,5 $\mu$m,
ac2) une quatrième charge avec un diamètre moyen de particule D50 dans la plage de 6,0 à 22 $\mu$m, préférablement dans la plage de 7,0 à 19 $\mu$m, et
ac3) éventuellement au moins une autre charge qui n'est pas une charge selon ac1) et ac2),
b) au moins un liant organique, qui représente une dispersion aqueuse de polymère,

c) pas de dioxyde de titane ou du dioxyde de titane en quantité calculée comme une part de charge inférieure à 1,0 % en poids, par rapport au poids total du matériau de revêtement,

d) au moins un additif,

e) éventuellement au moins un silicate de soude et/ou une silice colloïdale, en particulier le silicate de soude, ainsi que

f) éventuellement au moins un alkylalkoxysilane, un alkylalkoxysiloxane, un alkalialkylsiliconate hydrosoluble, en particulier un méthylsiliconate de potassium, un monoalkylsilanetriol, un dialkylsilanediol, un trialkylsilanol, un sel alcalin de monoalkylsilanetriol, en particulier un méthylsilanetriolate de potassium et/ou un éthylsilanetriolate de potassium, un dialkylsilanediol ou trialkylsilanol ou des mélanges quelconques de ceux-ci, et/ou

g) éventuellement au moins un pigment qui n'est pas un dioxyde de titane,

dans lequel la définition du diamètre moyen de particule D50 se fait selon les normes DIN ISO 9276-1:2004-09 et ISO 9276-2:2014-05.

2. Matériau de revêtement selon la revendication 1, comprenant en outre h) au moins un agent dispersant et/ou au moins un agent mouillant.

3. Matériau de revêtement selon la revendication 1 ou 2, comprenant

5 à 65 % en poids, préférablement 10 à 65 % en poids, de charges ac), et/ou

0,50 à 20 % en poids, de préférence 1 à 20 % en poids et particulièrement préférablement 1,5 à 15 % en poids de dispersion de polymère b), respectivement par rapport à la teneur solide, et/ou

0 à 0,99 % en poids, préférablement 0,20 à 0,98 % en poids et particulièrement préférablement 0,30 à 0,95 % en poids, de dioxyde de titane c), et/ou 0,05 à 3,0 % en poids, de préférence 0,10 à 2,0 % en poids, particulièrement préférablement 0,15 à 1,0 % en poids, de constituants f), préférablement l'alkalialkylsiliconate, particulièrement préférablement le méthylsiliconate de potassium, et/ou

0,10 à 5,0 % en poids, préférablement 0,20 à 4,5 % en poids et particulièrement préférablement 0,30 à 3,0 % en poids, d'additifs d), respectivement par rapport à la teneur solide ou la teneur en matériau pur, et/ou

plus de 0 à 1,0 % en poids, préférablement 0,05 à 0,50 % en poids et particulièrement préférablement 0,10 à 0,30 % en poids, respectivement par rapport à la part en matériau solide, de silicate de soude e) et de préférence sans silice colloïdale, et/ou

0 à 20 % en poids, de préférence 4 à 16 % en poids, particulièrement préférablement 8 à 15 % en poids, de constituants g), et/ou

0 à 3,0 % en poids, de préférence 0,10 à 2,0 % en poids, particulièrement préférablement 0,15 à 1,0 % en poids, de constituants h),

dans lequel les constituants formant le matériau de revêtement s'ajoutent pour obtenir toujours un total de 100,0 % en poids.

4. Matériau de revêtement selon la revendication 1, 2 ou 3, en particulier selon la revendication 3, **caractérisé en ce que** les charges ac) comprennent ou se composant de

2 à 30 % en poids, préférablement 4 à 25 % en poids et particulièrement préférablement

8 à 20 % en poids, de la première charge selon ac1), en particulier du carbonate de calcium synthétique, ou de la deuxième et troisième charge selon ac1),

2 à 30 % en poids, préférablement 4 à 25 % en poids et particulièrement préférablement

6 à 20 % en poids, de la quatrième charge selon ac2) et 0 à 61 % en poids, préférablement 2 à 45 % en poids et particulièrement préférablement 5 à 40 % en poids, de l'autre charge selon ac3), dans lequel les charges ac1) et ac2) ainsi qu'éventuellement ac3) et la deuxième charge ainsi qu'éventuellement l'autre charge produisent toujours une teneur en charge dans la plage de 3 à 65 % en poids, préférablement dans la plage de 10 à 60 % en poids.

5. Matériau de revêtement selon l'une quelconque des revendications précédentes, **caractérisé par** une concentration pigmentaire volumique calculée (CPV) qui correspond à la concentration pigmentaire volumique du revêtement qui peut être obtenu à partir du matériau de revêtement ou qui se situe de préférence au-dessus de cette concentration pigmentaire volumique critique.

6. Matériau de revêtement selon l'une quelconque des revendications précédentes, **caractérisé en ce que** la première charge ac1-1) comprend ou représente un élément minéral synthétique, préférablement du carbonate de calcium de synthèse, et/ou **en ce que** la deuxième charge ac1-2) comprend ou représente un élément minéral synthétique, préférablement du carbonate de calcium de synthèse, et/ou une charge siliceuse, préférablement un élément minéral synthétique, particulièrement préférablement du carbonate de calcium de synthèse, et/ou **en ce que**

la troisième charge ac1-3) comprend ou représente un élément minéral synthétique, préférablement du carbonate de calcium de synthèse, et/ou une charge siliceuse, préférablement un élément minéral synthétique, particulièrement préférablement du carbonate de calcium de synthèse, et/ou **en ce que**
la quatrième charge ac2) comprend ou représente une charge siliceuse et/ou **en ce que** l'autre charge ac3) comprend ou représente au moins une charge siliceuse et/ou au moins une charge à base de carbonate de calcium, en particulier du carbonate de calcium.

**7.** Matériau de revêtement selon l'une quelconque des revendications précédentes, **caractérisé en ce que**
celui-ci contient l'au moins un composé des constituants f), préférablement un alkalialkylsiliconate hydrosoluble et particulièrement préférablement un méthylsiliconate de potassium, ou **en ce que**
celui-ci contient l'au moins un composé des constituants f), préférablement un alkalialkylsiliconate hydrosoluble et particulièrement préférablement un méthylsiliconate de potassium, et l'au moins un silicate de soude et/ou une silice colloïdale selon les constituants e), en particulier un silicate de soude.

**8.** Matériau de revêtement selon l'une quelconque des revendications précédentes, **caractérisé en ce que**
la première charge ac1-1) ou la deuxième charge ac1-2) et la troisième charge ac1-3) comprennent ou représentent un carbonate de calcium de synthèse et comprenant en outre les constituants f), préférablement l'alkalialkylsiliconate hydrosoluble, particulièrement préférablement le méthylsiliconate de potassium, et
0 à 0,3 % en poids, préférablement 0,01 à 0,3 % en poids, de constituants e) (part en matériau solide), préférablement le silicate de soude, et
pas de dioxyde de titane ou du dioxyde de titane (constituant c)) en quantité calculée comme une part en matériau solide inférieure à 1,0 % en poids, par rapport au poids total du matériau de revêtement, et **en ce que**
le liant organique b) est présent sous la forme d'une dispersion aqueuse à base de copolymères d'aromate vinylique, en particulier composée ou à base de styrène et d'acrylate, et/ou de copolymères d'acrylate pur.

**9.** Matériau de revêtement selon l'une quelconque des revendications précédentes, **caractérisé en ce que**
celui-ci est sensiblement exempt d'agents conservateurs en pot et/ou en film, préférablement exempt de conservateurs biocides organiques et particulièrement préférablement exempt de tout conservateur.

**10.** Matériau de revêtement selon l'une quelconque des revendications précédentes, **caractérisé en ce que**
celui-ci présente une valeur pH dans la plage de 8,5 à 12, de préférence dans la plage de 9 à 11,5, ou est ajusté sur une valeur pH dans la plage de 8,5 à 12, de préférence dans la plage de 9 à 11,5.

**11.** Matériau de revêtement selon une quelconque des revendications précédentes, **caractérisé en ce que**
l'au moins un additif d) est sélectionné parmi le groupe se composant d'agents épaississants, d'agents antimousse, d'agents conservateurs, d'agents stabilisants, en particulier d'agents stabilisants de pH, d'agents ignifugeants, d'agents hydrophobants, d'agents de matité, en particulier de la silice précipitée, d'additifs de surface, en particulier des additifs de surface au silicone, par exemple du polyméthylalkylsiloxane modifié polyéther et/ou des copolymères de silicone-polyéther, et des mélanges de ces composés.

**12.** Matériau de revêtement selon l'une quelconque des revendications précédentes, **caractérisé en ce que**
celui-ci représente une peinture-dispersion, une couche de fond ou une charge d'enduit, en particulier une peinture-dispersion.

**13.** Couche de peinture ou couche de fond sur une surface de substrat, obtenue ou pouvant être obtenue par l'application en une ou plusieurs fois du matériau de revêtement selon une des revendications précédentes sur la surface de substrat.

**14.** Utilisation du matériau de revêtement selon une des revendications 1 à 12 pour la préparation d'une peinture-dispersion ou sous la forme de celle-ci, en particulier une peinture-dispersion pour une zone en intérieur, une couche de fond ou une charge d'enduit.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202017104644 U1

**In der Beschreibung aufgeführte Nicht-Patentliteratur**

- **DELLEF GYSAU.** Füllstoffe - Grundlagen und Anwendungen. Vincentz Network GmbH, 2005

- **WOLFGANG SCHULTZE.** Wässrige Siliconharz-Beschichtungssysteme für Fassaden. 345-347